# EUROPÄISCHE PATENTSCHRIFT

(11) **EP 0 445 384 B1**
(45) Veröffentlichungstag und Bekanntmachung des Hinweises auf die Patenterteilung: **26.07.1995**
(21) Anmeldenummer: 90123240.5
(22) Anmeldetag: 04.12.1990
(51) Int. Cl.: H04L 1/20, H04L 25/30

(54) **Verfahren und Schaltungsanordnung zur Pegelüberwachung**
Method and circuit arrangement for threshold control
Procédé et circuit pour le réglage d'un seuil

(30) Priorität: 06.03.1990 DE 4007013
(43) Veröffentlichungstag der Anmeldung: 11.09.1991
(73) Patentinhaber: SIEMENS AKTIENGESELLSCHAFT, 80333 München (DE)
(72) Erfinder: Schenk, Heinrich, Dr.-Ing., W-8000 München 71 (DE); Schnabel, Dirk, Dipl.-Ing., W-8000 München 70 (DE)

(56) Entgegenhaltungen:
- EP-A- 0 082 575
- GB-A- 2 072 908

## Beschreibung

Die Erfindung betrifft ein Verfahren zur Pegelüberwachung nach dem Oberbegriff des Patentanspruchs 1. In den unabhängigen Ansprüchen sind Schaltungsanordnungen zur Durchführung dieses Verfahrens angegeben.

Bei der digitalen Datenübertragung ist es häufig notwendig, den Empfangspegel zu überwachen. Hierdurch kann festgestellt werden, ob eine Leitung durch andere Teilnehmer belegt oder frei ist. Ebenso ist für den Verbindungsaufbau häufig eine spezielle Startprozedur festgelegt, bei der abwechselnd jeweils nur teilnehmerseitig oder vermittlungsseitig gesendet wird. Bei der Vermittlung muß hierbei - beispielsweise nach Erkennen eines Wecksignals - zuerst die Pegelabschaltung und später die Pegeleinschaltung überwacht und erkannt werden. Eine fehlerfreie Funktion muß hierbei für einen großen Pegelbereich gewährleistet sein, da der Pegel des Empfangssignals jeweils von einer höchst unterschiedlichen Leitungslänge abhängt. Die bisher bekannten Pegelüberwachungen gehen von einem festen Vergleichswert aus, wodurch bei stark gestörten oder verrauschten Signalen eine sichere Funktion nicht mehr möglich ist.

Aus der europäischen Patentanmeldung EP 00 82 575 Al ist ein Demodulator bekannt, bei dem durch eine Synchronisationsschaltung ein Detektionssignal auf Grund eines empfangenen modulierten Eingangssignals abgegeben wird. Ein Filter liefert ein konstantes Ausgangssignal, das das Vorliegen von gültigen Daten anzeigt. Synchronisierte Demodulation wird erreicht durch eine Korrelation zwischen der Phase oder der Frequenz in vorgegebenen Bitintervallen des ermittelten Detektionssignals.

Die Patentanmeldung GB 2 072 908 A betrifft ein digitales Funkrukommunikationssystem mit einem Sender und einer Vielzahl von Empfängern, bei dem ein Vorsignal und mindestens eine Gruppe von weiteren Signalen wie Anrufsignale und Synchronisationssignal, ausgesendet werden. Die jeweiligen Empfänger weisen Einrichtungen zum Demodulieren des Vorsignals und zur Rückgewinnung der übrigen Signalen auf. Unter der Vielzahl von übermittelten Signalen befindet sich auch ein Stabilisierungssignal zur Abgabe einer Referenzspannung wie ein Synchronisationssignal zur Rückgewinnung der restlichen übertragenen Signale.

Aufgabe der Erfindung ist es, ein Verfahren zur Pegelüberwachung für einen großen Pegelbereich anzugeben. Außerdem sind geeignete Anordnungen zur Realisierung des Verfahrens anzugeben.

Die Aufgabe wird durch die im Anspruch 1 angegebenen Merkmale gelöst.

Das Verfahren hat den Vorteil, daß zunächst ein Referenzsignal aus dem empfangenen Signal abgeleitet wird. Ein empfangenes Signal ist besonders einfach zu erkennen, wenn ihm ein besonderes Vorsignal vorangestellt wird. Dies kann beispielsweise ein Signal mit einer vorgegebenen Frequenz, ein sogenannter Weckton sein. Aber auch ohne ein spezielles Vorsignal kann ein Datensignal durch Vergleich seines Hauptspektrum mit dem gesamten empfangenen Signal sicher erkannt werden. Je nach dem verwendeten Übertragunscode bzw. dem gewählten Modulationsverfahren ist es häufig vorteilhaft, den Referenzwert aus dem arithmetischen oder aus dem geometrischen Mittelwert abzuleiten.

Besonders vorteilhaft ist es, daß die Pegelerkennung mit einer Hysterese ausgestattet ist. Hierdurch wird bei einem großen Pegelbereich eine hohe Zuverlässigkeit für das Ansprechen der Pegelüberwachung gewährleistet.

Eine Anordnung zur Durchführung des Verfahrens kann sowohl mit herkömmlichen Schaltkreisen wie Addierern, Subtrahierern, Zählern, Komparatoren und Kippstufen realisiert werden, als auch durch einen Digitalrechner, beispielsweise einen Mikroprozessor, realisiert werden.

Das Verfahren wird anhand von zwei Ausführungsbeispielen näher erläutert. Von den hierzu verwendeten Abbildungen zeigen:
- Fig. 1: ein Prinzipschaltbild der Pegelüberwachung,
- Fig. 2: ein empfangenes Datensignal,
- Fig. 3: ein Prinzipschaltbild zur Ermittlung des Referenzwertes,
- Fig. 4: ein Prinzipschaltbild eine Signalerkennungsschaltung
- Fig. 5: eine mit einem Mikroprozessor realisierte Schaltungsanordnung.

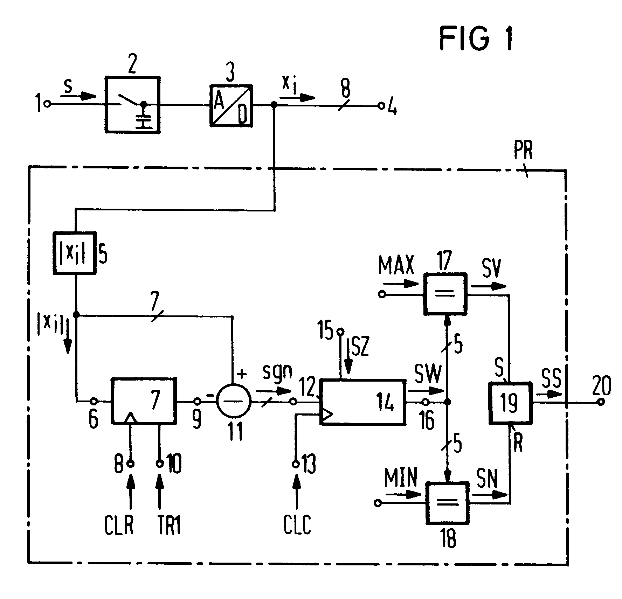

Das in Figur 1 dargestellte Prinzipschaltbild der Pegelüberwachung enthält eine Abtast- und Halteschaltung 2, deren Eingang 1 ein bandbegrenztes Datensignal s zugeführt wird. An die Abtast- und Halteschaltung schließt sich ein Analog-Digital-Umsetzer 3 an, an dessen Ausgang 4 digitale Abtastwerte xᵢ ausgegeben werden. Der Ausgang 4 ist mit einer Betragsbildungsschaltung 5 verbunden, deren Ausgang einmal direkt mit einem ersten Eingang eines als Subtrahierer ausgebildeten Vergleichers 11 und über eine Referenzwertschaltung 7 mit dem Subtraktionseingang des Subtrahieres verbunden ist. Lediglich das Vorzeichenbit sgn wird vom Ausgang des Subtrahierers dem Steuereingang 12 eines Aufwärts-Abwärts-Zählers 14 zugeführt, dessen Ausgang 16 an zwei Komparatoren 17 und 18 geführt ist. Die Ausgänge der Komparatoren steuern eine Kippstufe 19, die an ihrem Ausgang 20 ein Steuersignal SS abgibt.

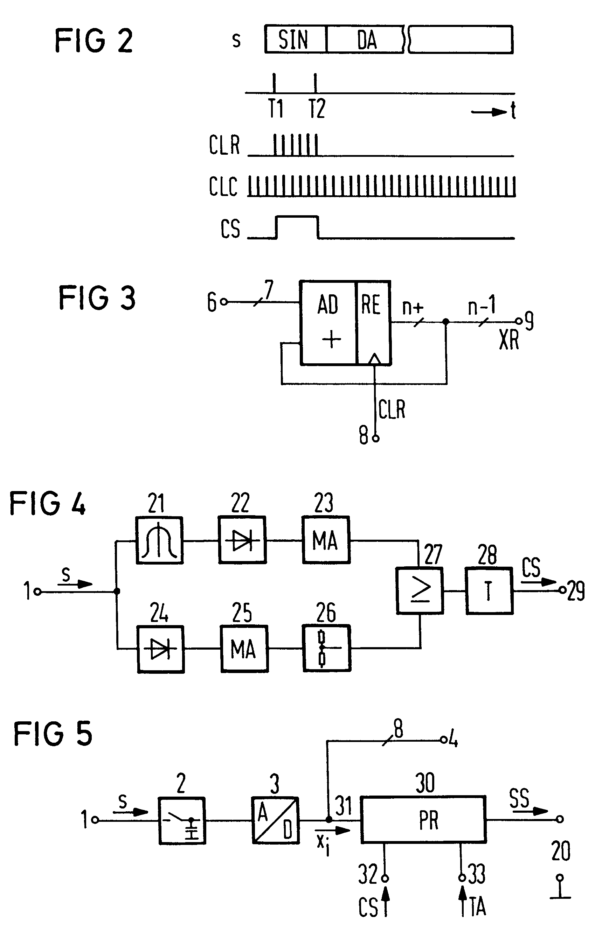

Das Verfahren wird anhand der Startprozedur nach dem "american national standard for telecommunication" erläutert; es kann jedoch grundsätzlich bei allen Übertragungssystemen verwendet werden. Zu Beginn eines empfangenen Datenblockes nach Figur 2 wird als Vorsignal - ein sogenannter Weckton - eine Sinusschwingung SIN von 10 kHz-übertragen. In einer Signalerkennungsschaltung (Fig. 4) wird das Vorsignal herausgefiltert und nach dessen sicherem Erkennen ab einem Zeitpunkt T1 bis zu einem Zeitpunkt T2 die Referenzwertschaltung 7 aktiviert. Das Vorsignal wird - wie auch die später empfangenen Daten DA - beispielsweise mit einer Taktfrequenz von 80 kHz abgetastet und digitalisiert. Anschließend werden in der Betragsbildungsschaltung 5 die Beträge |xᵢ| der digitalen Abtastwerte xᵢ gebildet. Dies kann je nach Zahlendarstellung durch Weglassen des Vorzeichenbits oder, bei einer Zweierkomplementdarstellung der negativen Abtastwerte, durch Umsetzen in eine positive Zahl geschehen. Die Referenzwertschaltung soll hier beispielsweise den arithmetischen Mittelwert bilden. Dies ist einfach zu realisieren. Nach Figur 3 besteht die Referenzwertschaltung aus einem Addierer AD mit einem nachgeschalteten Register RE. Einem ersten Eingang 6 des Addierers AD werden die Abtastwerte |xᵢ| zugeführt und zu dem im Register gespeicherten Wert, der einem zweiten Eingang des Addierers zugeführt wird, addiert. Die Summe wird mit einem am Takteingang 8 anliegenden nur zwischen den Zeitpunkten T1 und T2 vorhandenen dem Abtasttakt entsprechenden Arbeitstakt CLR in das Register eingespeichert.

Der arithmetische Mittelwert wird gebildet, indem das zum Zeitpunkt T2 im Register RE gespeicherte Ergebnis durch die Anzahl der Arbeitstakte CLR dividiert wird. Entspricht diese einer Zweierpotenz, dann kann die Division durch einfache Stellenverschiebung bewirkt werden, d.h. von den in Register vorhandenen n+k Binärstellen werden am Ausgang 9 nur die ersten n Binärstellen verwendet. Bei 256 Abtasttakten werden also die k = 8 niederwertigsten Binärstellen ignoriert. Der arithmetische Mittelwert multipliziert mit einem Normierungsfaktor ergibt den Referenzwert XR. Ist der Normierungsfaktor beispielsweise 0,5, so wird lediglich der arithmetische Mittelwert um eine weitere Binärstelle verschoben. Der Referenzwert bleibt bis zum Auftreten eines weiteren Vorsignals oder bis zum Auflösen der Verbindung gespeichert.

Soll der quadratische Mittelwert (Effektivwert) zur Ermittlung des Referenzwertes verwendet werden, so müssen die digitalen Abtastwerte xᵢ miteinander multipliziert werden, wobei natürlich eine vorhergehende Betragsbildung entfallen kann. Bei der Verwendung eines Maximalwertes zur Bildung des Referenzwertes braucht lediglich der betragsmäßig größte Abtastwert gespeichert werden.

In dem Vergleicher 11 (Subtrahierer oder Komparator) wird ermittelt, ob die Abtastwerte größer als der Referenzwert sind. Ist dies der Fall, so zählt der Aufwärts-Abwärts-Zähler 14 mit einem am Takteingang 13 anliegenden dem Abtasttakt entsprechenden Arbeitstakt CLC aufwärts, bis ein erster Vergleichswert SW = MAX erreicht ist. Dies wird noch während des Vorsignals der Fall sein. Der erste Komparator 17 gibt dann ein Signal SV ab, das eine RS-Kippstufe 19 einstellt, die an ihrem Ausgang 20 das Steuersignal SS = 1 abgibt, das die Empfangseinrichtung aktiviert und die eigene Senderichtung blockiert. Der Aufwärts-Abwärts-Zähler muß eine Überlauflogik aufweisen, d.h., er darf nicht über seine Extremwerte hinauszählen, sondern muß sich selbst blockieren. Ein Extremwert kann mit dem Vergleichswert MAX übereinstimmen. Bei Betriebsaufnahme oder Erkennen des Vorsignals kann der Aufwärts-Abwärts-Zähler an seinem Setzeingang 15 durch ein Setzsignal SZ in eine beliebige Stellung gesetzt werden, wodurch beispielsweise das Steuersignal SS = 1 (Pegel vorhanden) abgegeben wird. Ebenso kann der Referenzwert beim Verbindungsaufbau oder Verbindungsabbau über einen Rücksetzeingang 10 durch einen Rücksetztakt TR1 gelöscht werden.

Nach dem Ende des empfangenen Datenblockes werden in der Regel die Abtastwerte |xᵢ| kleiner als der Referenzwert XR sein. Durch das Vorzeichenbit sgn wird der Aufwärts-Abwärts-Zähler jetzt abwärts zählen, bis der zweite Vergleichswert MIN erreicht ist. Durch den zweiten Komparator 18 wird dann durch ein Signal SN die RS-Kippstufe 19 rückgesetzt und ein Steuersignal SS = 0 (kein Empfangssignal) zur Aktivierung der eigenen Sendeeinrichtung abgegeben. Die Pegelüberwachung soll im allgemeinen relativ rasch reagieren. Als Vergleichswerte können beispielsweise gewählt werden MIN = 0 und MAX = 31. Der Aufwärts-Abwärts-Zähler weist dann fünf Kippstufen auf. Die Komparatoren 17 und 18 können in den Zähler integriert werden, beispielsweise durch eine Gatterlogik für die Extremwerte, wobei die Übertragsausgänge dann direkt die RS-Kippstufe 19 steuern und den Arbeitstakt CLC blockieren.

Ebenso wird bei Empfang eines neuen Datenblockes der Zähler von seinem Minimalwert rasch wieder seinen Maximalwert erreichen und den erneuten Empfang eines Datensignals signalisieren. Wenn, wie im Ausführungsbeispiel nach Fig. 1, nur die Kriterien "größer (oder größer und gleich) oder kleiner als der Referenzwert" ausgewertet werden, ist es für die Funktion gleichgültig, ob ein üblicher Komparator oder ein Subtrahierer 11 verwendet wird.

In Figur 4 ist ein Beispiel einer Signalerkennungsschaltung angegeben. Diese ist nicht Teil der Erfindung und den unterschiedlichen Empfangssignalen entsprechend unterschiedlich aufgebaut. Das empfangene Signal wird über ein Filter 21, dies kann beispielsweise ein Bandpaß oder ein Schwingkreis sein, auf eine erste Gleichrichterschaltung 22 gegeben und über einen Mittelwert-Schaltkreis 23 auf einen ersten Eingang eines Komparators 27 geführt. Das Empfangssignal wird außerdem ohne spezielle Filterung über einen zweiten Gleichrichter 24, einen zweiten Mittelwert-Schaltkreis 25 und einen Spannungsteiler 26 auf einen zweiten Eingang des Komparators 27 gegeben. In diesem Schaltungszweig kann auch ein als Bandsperre wirkendes Filter eingesetzt sein. An den Ausgang des Komparators ist ein Zeitglied 28 eingeschaltet.

Wenn die Amplitude des Vorsignals zur Amplitude des gesamten Signals ein bestimmtes Verhältnis übersteigt, wird das Zeitglied 28 aktiviert und liefert zwischen T1 und T2 ein Zeitfenstersignal CS (Fig. 2), das die Referenzwert-Schaltung aktiviert, beispielsweise durch Anlegen eines Referenztaktes CLR während der Dauer des Zeitfensters. Wenn das Zeitfenster eine exakte Anzahl von Arbeitstakten umfassen soll, dann wird als Zeitglied ebenfalls ein vom Arbeitstakt CLC gesteuerter Zähler verwendet. Die Mittelwert-Schaltkreise und der Spannungsteiler können realisiert werden, indem die Gleichrichter über unterschiedliche ohmsche Widerstände einen Kondensator laden bzw. entladen.

Die Signalerkennungsschaltung kann natürlich auch digital ausgeführt werden. So kann ein Vorsignal mit konstanter Frequenz durch Messung der Periodendauer erkannt werden. Entsprechen mehrere aufeinanderfolgende Perioden oder eine vorgegebene Anzahl gemessenen Perioden der Periodendauer des Vorsignals (Wecktones), so wird das Zeitfenstersignal zur Ermittlung des Referenzwertes abgegeben.

Die Funktion des in Figur 1 mit hardwaremäßig aufgebauten Prozessors PR kann, von der Analog-Digital-Umsetzung des Datensignal s abgesehen, auch als Programmteil in einem digitalen Prozessor realisiert werden. Die entsprechende Anordnung ist in Figur 5 dargestellt. Einem digitalen Prozessor (Mikroprozessor) 30 werden über seinen Dateneingang 31 die digitalen Abtastwerte xᵢ zugeführt. Außer einem Arbeitstakt TA, der seinem Takteingang 33 zugeführt wird, benötigt er noch das Zeitfenstersignal CS zur Steuerung der Referenzwertbildung (wenn er dieses nicht auch selber bildet). Der Prozessor kann die gestellten Aufgaben, wie Absolutwertbildung, Ermittlung des Referenzwertes aus dem arithmetischen Mittelwert, Differenzbildung bzw. Vergleich von Abtastwert und Referenzwert sowie Addition des Vergleichsergebnisses ohne Probleme ausführen. Da der Schaltungsaufwand unbeachtlich ist, können beispielsweise auch die Ergebnisse der Differenzbildung direkt addiert werden und hierdurch auch bei äußerst kritischen Empfangssignalen noch Aussagen über ein vorhandenes Empfangssignal gemacht werden, während die alleinige Verwendung der Vorzeichen einer groben Quantisierung entspricht. Eine programmäßige Realisierung der Pegelüberwachung bereitet dem Fachmann keinerlei Schwierigkeiten, da weder mathematische noch programmtechnische Spezialkenntnisse erforderlich sind.

Ein Datenausgang des Prozessors kann als Ausgang 20 der Pegelüberwachung direkt verwendet werden. Natürlich kann das Steuersignal SS auch über einen Zustandsspeicher ausgegeben werden.

## Patentansprüche

1. Verfahren zur Pegelüberwachung für ein Datensignal (s),
**dadurch gekennzeichnet**,
daß das empfangene Datensignal (s) abgetastet und in digitale Abtastwerte (xᵢ) umgesetzt wird,
daß ein zur Amplitude des Datensignals (s) proportionaler Referenzwert (XR) ermittelt und gespeichert wird,
daß die Abtastwerte (xᵢ) mit dem Referenzwert (XR) betragsmäßig verglichen werden,
daß die Differenzen oder die Vorzeichen der Differenzen der Vergleiche summiert werden und
daß, wenn die Amplituden der Abtastwerte (xᵢ) den Referenzwert (XR) häufiger über- als unterschreiten, bei Erreichen eines ersten Vergleichswertes (MAX) ein Steuersignal (SS = 1) abgegeben wird, das den Empfang eines Datensignals signalisiert während bei Erreichen eines zweiten Vergleichswertes (MIN) aufgrund umgekehrter Amplitudenverhältnisse der Abtastwerte (xᵢ) und des Referenzwertes (XR) ein Steuersignal (SS = 0) abgegeben wird, das das Fehlen eines Datensignals anzeigt.

2. Verfahren nach Anspruch 1,
**dadurch gekennzeichnet**,
daß der Referenzwert (XR) zwischen zwei vorgegebenen Zeitpunkten (T1, T2) während des Empfangs des Datensignals (s) ermittelt wird.

3. Verfahren nach Anspruch 1 oder 2,
**dadurch gekennzeichnet**,
daß die Ermittlung des Referenzwertes (XR) während eines speziellen Vorsignals (SIN) zu Beginn eines empfangenen Datenblockes erfolgt.

4. Verfahren nach einem der vorhergehenden Ansprüche,
**dadurch gekennzeichnet,**
daß als Referenzwert (XR) der arithmetische Mittelwert, der quadratische Mittelwert oder der Spitzenwert jeweils multipliziert mit einem konstanten Bewertungsfaktor ermittelt wird.

5. Verfahren nach einem der vorhergehenden Ansprüche,
**dadurch gekennzeichnet,**
daß bei Beginn der Ermitttlung des Referenzwertes (XR) oder bereits bei Erkennen des Vorsignals, die Kriterien gesetzt werden, die den Empfang eines Datensignals entsprechen.

6. Anordnung zur Pegelüberwachung für ein Datensignal (s),
**dadurch gekennzeichnet,**
daß eine Reihenschaltung einer Abtastvorrichtung (2) und eines Analog-Digital-Umsetzers (3) vorgesehen ist, der das Datensignal (s) zugeführt wird, und die es in digitale Abtastwerte (xᵢ) umsetzt,
daß an den Ausgang des Analog-Digital-Umsetzers eine Betragsbildungsschaltung (5) angeschaltet ist, die den Betrag der Abtastwerte (xᵢ) bildet,
daß der Ausgang der Betragsbildungsschaltung (5) mit einem ersten Eingang eines Vergleichers (11) verbunden ist und auf eine Referenzwertschaltung (7) geführt ist, die aus den Abtastwerten einen Referenzwert (XR) ermittelt,
daß der Ausgang (9) der Referenzwert-Schaltung (7) mit einem zweiten Eingang des Vergleichers (11) verbunden ist und daß der Ausgang des Vergleichers (11) mit dem Steuereingang (12) eines Vorwärts-Rückwärts-Zählers (14) verbunden ist, dessen Ausgänge (16) über Komparatoren (17, 18) eine Kippstufe (19) steuern, an deren Ausgang (20) ein Steuersignal (SS=1, SS=0) abgegeben wird.

7. Anordnung nach Anspruch 6,
**dadurch gekennzeichnet,**
daß als Vergleicher (11) ein Subtrahierer vorgesehen ist.

8. Anordnung zur Pegelüberwachung für ein Datensignal (s),
**dadurch gekennzeichnet**,
daß eine Reihenschaltung einer Abtastvorrichtung (2) und eines Analog-Digital-Umsetzers (3) vorgesehen ist, der das Datensignal (s) zugeführt wird und die es in digitale Abtastwerte (xᵢ) umsetzt, und
daß ein digitaler Prozessor (30) an den Ausgang des AnalogDigital-Umsetzers (3) angeschaltet ist, der aus den digitalen Abtastwerten (xᵢ) deren Betrag (|xᵢ|) bildet, aus den Abtastwerten (xᵢ) einen Referenzwert (XR) ermittelt, diesen mit dem Betrag (|xᵢ|) der Abtastwerte vergleicht, die Differenzen oder die Vorzeichen der Differenzen summiert, fortlaufend einen Vergleich der aufsummierten Werte (SW) mit einem ersten Vergleichswert (MAX) und mit einem zweiten Vergleichswert (MIN) durchführt, bei Erreichen des ersten Vergleichswertes (MAX) ein Steuersignal (SS = 1) abgibt, das ein empfangenes Datensignal (s) signalisiert, und bei Erreichen des zweiten Vergleichswertes (MIN) ein Steuersignal (SS = 0) abgibt, das das Fehlen des Datensignals signalisiert.

## Claims

1. Method for level monitoring for a data signal (s), characterized in that the received data signal (s) is sampled and is converted into digital samples (xᵢ), in that a reference value (XR) which is proportional to the amplitude of the data signal (s) is determined and stored, in that the magnitudes of the samples (xᵢ) are compared with the reference value (XR), in that the differences or the mathematical signs of the differences of the comparisons are added and in that, if the amplitudes of the samples (xᵢ) are relatively frequently greater than or less than the reference value (XR), a control signal (SS = 1) is emitted on reaching a first comparison value (MAX), which control signal signals the reception of a data signal, while a control signal (SS = 0) which indicates the absence of a data signal is emitted on reaching a second comparison value (MIN) on the basis of reversed amplitude relationships of the samples (xᵢ) and of the reference value (XR).

2. Method according to Claim 1, characterized in that the reference value (XR) is determined between two predetermined points in time (T1, T2) during the reception of the data signal (s).

3. Method according to Claim 1 or 2, characterized in that the determination of the reference value (XR) is carried out during a specific preliminary signal (SIN) at the start of a received data block.

4. Method according to one of the preceding claims, characterized in that the arithmetic mean, the root-mean-square value or the peak value, in each case multiplied by a constant weighting factor, is determined as the reference value (XR).

5. Method according to one of the preceding claims, characterized in that the criteria which correspond to the reception of the data signal are set at the start of the determination of the reference value (XR) or even on identification of the preliminary signal.

6. Arrangement for level monitoring for a data signal (s), characterized in that a series circuit comprising a sampling device (2) and an analog/digital converter (3) is provided, to which circuit the data signal (s) is supplied and which converts said data signal (s) into digital samples (xᵢ), in that a magnitude formation circuit (5), which forms the magnitude of the samples (xᵢ), is connected to the output of the analog/ digital converter, in that the output of the magnitude formation circuit (5) is connected to a first input of a comparator (11) and is passed to a reference value circuit (7) which determines a reference value (XR) from the samples, in that the output (9) of the reference value circuit (7) is connected to a second input of the comparator (11), and in that the output of the comparator (11) is connected to the control input (12) of an up-down counter (14) whose outputs (16) control, via comparators (17, 18), a flipflop (19) at whose output (20) a control signal (SS=1, SS=0) is emitted.

7. Arrangement according to Claim 6, characterized in that a subtracter is provided as the comparator (11).

8. Arrangement for level monitoring for a data signal (s), characterized in that a series circuit comprising a sampling device (2) and an analog/digital converter (3) is provided, to which circuit the data signal (s) is supplied and which converts said data signal (s) into digital samples (xᵢ), and in that a digital processor (30) is connected to the output of the analog/digital converter (3), which digital processor (30) forms the magnitude (|xᵢ|) from the digital samples (xᵢ), determines a reference value (XR) from the samples (xᵢ), compares this with the magnitude (|xᵢ|) of the samples, adds the differences or the mathematical signs of the differences, continuously carries out a comparison of the added values (SW) with a first comparison value (MAX) and with a second comparison value (MIN), emits a control signal (SS=1), which signals a received data signal (s), on reaching the first comparison value (MAX), and emits a control signal (SS=0), which signals the absence of the data signal, on reaching the second comparison value (MIN).

## Revendications

1. Procédé de contrôle de niveau pour un signal de données (s), caractérisé par le fait
que l'on échantillonne le signal de données reçu (s) et on le convertit en valeurs d'échantillonnage numériques (xᵢ),
on détermine et on mémorise une valeur de référence (XR), qui est proportionnelle à l'amplitude du signal de données (s), on compare en valeur absolue les valeurs d'échantillonnage (xᵢ) à la valeur de référence (XR),
on fait la somme des différences ou des signes des différences des comparaisons, et
lorsque les amplitudes des valeurs d'échantillonnage (xᵢ) sont plus souvent supérieures qu'inférieures à la valeur de référence (XR), on fournit un signal (SS=1) de commande , lorsqu'une première valeur de comparaison (MAX) est atteinte, ce signal de commande signalant la réception d'un signal de données tandis que, dans le cas où une seconde valeur de comparaison (MIN) est atteinte, on fournit en raison des conditions inverses d'amplitude des valeurs d'échantillonnage (xᵢ) et de la valeur de référence (X1), un signal de commande (SS=O), qui indique l'absence d'un signal de données.

2. Procédé suivant la revendication 1, caractérisé par le fait que l'on détermine la valeur de référence (XR) entre deux instants prescrits (T1,T2) pendant la réception du signal de données (s).

3. Procédé suivant la revendication 1 ou 2, caractérisé par le fait que la détermination de la valeur de référence (XR) s'effectue pendant un signal préalable particulier (SIN) au début d'un bloc de données reçu.

4. Procédé suivant l'une des revendications précédentes, caractérisé par le fait qu'on détermine, en tant que valeur de référence (XR), la valeur moyenne arithmétique, la valeur moyenne quadratique ou la valeur maximale, respectivement multipliée par un facteur de pondération constant.

5. Procédé suivant l'une des revendications précédentes, caractérisé par le fait qu'au début de la détermination de la valeur de référence (XR) ou déjà lors de l'identification du signal préalable, on fixe les critères, qui correspondent à la réception d'un signal de données.

6. Dispositif de contrôle de niveau pour un signal de données (s), caractérisé par le fait
qu'il est prévu un circuit série, qui est formé d'un dispositif d'échantillonnage (2) et d'un convertisseur analogique/ numérique (3), auquel est envoyé le signal de données (s) et qui convertit ce signal en des valeurs d'échantillonnage numériques (xᵢ),
un circuit de formation de valeur absolue (5), qui forme la valeur absolue des valeurs d'échantillonnage (xᵢ), est branché à la sortie du convertisseur analogique/numérique
que la sortie du circuit de formation de valeur absolue (5) est reliée à une première entrée d'un comparateur (11) et est raccordée à un circuit à valeur de référence (7), qui détermine une valeur de référence (XR) à partir des valeurs d'échantillonnage,
que la sortie (9) du circuit à valeur de référence (7) est reliée à une seconde entrée du comparateur (11), et
que la sortie du comparateur (11) est reliée à l'entrée de commande (12) d'un compteur progressif/régressif (14), dont les sorties (16) commandent, par l'intermédiaire de comparateurs (17,18), un étage à bascule (19), à la sortie duquel (20) un signal de commande (SS=1, SS=0) est fourni .

7. Dispositif suivant la revendication 6, caractérisé par le fait qu'un soustracteur est prévu en tant que comparateur (11).

8. Dispositif pour le contrôle de niveau d'un signal de données (s), caractérisé par le fait
qu'il est prévu un circuit série, qui est formé d'un dispositif d'échantillonnage (2) et d'un convertisseur analogique/ numérique (3), auquel est envoyé le signal de données (s), et qui convertit ce signal en des valeurs d'échantillonnage numériques (xᵢ),
un processeur numérique (30) est branché à la sortie du convertisseur analogique/numérique (3), ce processeur forme, à partir des valeurs d'échantillonnage numériques (xᵢ), leur valeur absolue (|xᵢ|), détermine une valeur de référence (XR) à partir des valeurs d'échantillonnage (xᵢ), compare cette valeur de référence à la valeur absolue (|xᵢ|) des valeurs d'échantillonnage, fait la somme des différences ou des signes des différences, effectue de façon continue une comparaison des valeurs sommées (SW) à une première valeur de comparaison (MAX) et à une seconde valeur de comparaison (MIN) , fournit, lorsque la première valeur de comparaison (MAX) est atteinte, un signal de commande (SS=1), qui signale un signal de données reçu (s) et fournit, lorsque la seconde valeur de comparaison (MIN) est atteinte, un signal de commande (SS=O), qui signale l'absence du signal de données.
